# EUROPÄISCHE PATENTSCHRIFT

(11) **EP 1 707 415 B1**
(45) Veröffentlichungstag und Bekanntmachung des Hinweises auf die Patenterteilung: **03.08.2011**
(21) Anmeldenummer: 06004301.5
(22) Anmeldetag: 03.03.2006
(51) Int. Cl.: B60J 7/12, B60J 7/057, E05F 15/10

(54) **Cabriolet-Fahrzeug mit einem manuell notbetätigbaren Antrieb**
Carbriolet vehicle with manually operable emergency mechanism
Cabriolet avec actionneur d'urgence manuel

(30) Priorität: 02.04.2005 DE 102005015166
(43) Veröffentlichungstag der Anmeldung: 04.10.2006
(73) Patentinhaber: Wilhelm Karmann GmbH, 49084 Osnabrück (DE)
(72) Erfinder: Selle, Heinrich, 32549 Bad Oeynhausen (DE); Flaspöhler, Dirk, 49124 Georgsmarienhütte (DE); Heidtmann, Hermann, 49740 Haselünne (DE); Habacker, Norbert, 49565 Bramsche (DE)
(74) Vertreter: Kronthaler, Schmidt & Coll.

(56) Entgegenhaltungen:
- DE-C1- 19 734 815
- DE-U1- 20 210 760
- US-A- 3 004 788
- US-A- 3 534 630

## Beschreibung

Die Erfindung betrifft ein Cabriolet-Fahrzeug mit einem über zumindest ein Eingriffsorgan mittelbar oder unmittelbar an einem Windschutzscheibenrahmen sicherbaren Dach mit zumindest einem Antrieb und einer Notbetätigungsmöglichkeit nach dem Oberbegriff des Anspruchs 1 sowie eine Bewegungsvorrichtung mit einem Antrieb nach dem Oberbegriff des Anspruchs 12.

Es sind zahlreiche Cabriolet-Fahrzeuge bekannt, bei denen das bewegbare Dach in seiner geschlossenen Stellung über zwei seitlich außen liegende Eingriffsglieder, etwa Drehfallen, Fanghaken oder ähnliches, an dem Windschutzscheibenrahmen des Fahrzeugs sicherbar ist.

Diese Eingriffsglieder sind über im wesentlichen quer zum Fahrzeug erstreckte und damit dem Verlauf der am Windschutzscheibenrahmen anliegenden Dachspitze folgende Kraftvermittler, etwa Ketten oder insbesondere Zug-und/oder Schubstangen, mit einem zentralen und häufig motorischen Antrieb verbunden.

Um bei Ausfall des Antriebs auch eine manuelle Notbetätigung zu ermöglichen und das Dach dann wenigstens durch Verriegelung der Eingriffsorgane schließen zu können, zeigt die DE 202 10 760 U1 einen manuellen Eingriffsschlüssel, der ein Antriebszahnrad ausrücken kann und dadurch eine manuelle Getriebebeaufschlagung ermöglicht, ohne gegen einen stillstehenden Motor anarbeiten zu müssen. Ein solcher Schlüssel ist jedoch aufwendig und daher in der Fertigung kostspielig, was von dem Benutzer jedoch häufig nicht gewürdigt wird, da der Notbetätigungsschlüssel bei den weitaus meisten Fahrzeugen niemals zum Einsatz kommt.

Der Erfindung liegt das Problem zugrunde, eine einfache und dennoch komfortable Notbetätigung bei Ausfall eines Antriebsmotors zu ermöglichen.

Die Erfindung löst dieses Problem durch ein Cabriolet-Fahrzeug mit den Merkmalen des Anspruchs 1 und durch eine Bewegungsvorrichtung mit den Merkmalen des Anspruchs 12. Hinsichtlich vorteilhafter weiterer Ausgestaltungen der Erfindung wird auf die weiteren Ansprüche 2 bis 11 verwiesen.

Durch die Erfindung ist ein Ausrücken eines Zahnrades für die manuelle Notbetätigung entbehrlich. Dadurch, daß die Antriebswelle oder eine von dieser rotierbare und auf das Getriebe einwirkende Baueinheit eine Schnecke oder Spindel mit Bereichen unterschiedlicher Steigung ausbildet, können einerseits das oder die Antriebszahnräder mit hohem Drehmoment bei nur wenigen erforderlichen Umdrehungen beaufschlagt werden, so daß deren motorische Ver- oder Entriegelung möglich ist, wohingegen andererseits in einem Bereich mit zur Achse kleiner angestellten Flanken der Schnecke ein Notbetätigungszahnrad manuell ohne eine Selbsthemmung der Welle und daher mit geringem Kraftaufwand in diesem Bereich gedreht werden kann.

Ein besonders hohes Drehmoment auf das oder die Antriebszahnrad oder -zahnräder ist dann ermöglicht, wenn der auf das zumindest eine Antriebszahnrad einwirkende Bereich selbsthemmend und daher nicht von dem zumindest einen Antriebszahnrad drehbar ist. Ein Antriebszahnrad kann mit wenig Motorumdrehungen hinreichend weit gedreht werden, um ein vollständiges Öffnen oder Schließen der Eingriffsorgane einfach und mit wenig Kraftaufwand zu erreichen. Die Antriebszahnräder selbst können einen geringen Durchmesser aufweisen, so daß der erforderliche Bauraum gering ist.

Sofern in der vom Antrieb beaufschlagten Bewegung das zumindest eine Zahnrad der manuellen Notbetätigung lastfrei mitdreht, bedarf es keines gesonderten Kraftaufwands, um dieses Zahnrad manuell in Eingriff zu bringen. Die Notbetätigung kann sich dann auf eine reine Drehbewegung dieses Zahnrads beschränken, ohne daß eine zum Beispiel vertikale Druckkraft ausgeübt werden müßte.

Für die Notbetätigung kann dann zum Beispiel einfach ein Inbusschlüssel Verwendung finden, der vorteilhaft in ein einen Zentraleingriff des Zahnrades eingreifen kann. Dabei kann an beiden gegenüberliegenden Endes der das Zahnrad durchgreifenden Welle jeweils ein Eingriff vorgesehen sein, so daß die Einbaulage der gesamten Bewegungsvorrichtung um 180° gedreht werden kann. Dies erhöht die Anpaßbarkeit an verschiedene Fahrzeuge.

Der Bedienkomfort für die manuelle Notbetätigung ist besonders hoch, wenn das Zahnrad eine horizontale Einbaulage aufweist und das Handwerkzeug um eine vertikale Achse drehbar ist, da für diese Drehung des Handwerkzeugs genügend Raum zur Verfügung steht und anders als bei einer Drehung um eine horizontale Achse die Hand eines Benutzers nicht mit der Dachspitze kollidieren kann.

Dabei kann dennoch der Antrieb platzsparend quer im Fahrzeug liegen und die Antriebswelle um eine horizontale Achse drehbar ist. Die Umlenkung in um senkrechte Achsen drehende Antriebs- und Notbetätigungszahnräder erfolgt dann über die Schnecke der Antriebswelle oder der von dieser rotierbaren Baueinheit.

Eine Anordnung von zwei auf einander gegenüberliegenden Seiten der Welle gelegenen Antriebszahnrädern verbessert die Kraftübertragung von dem Motor auf das Getriebe und die Zuverlässigkeit.

Die beiden Antriebszahnräder können von unterschiedlichen, gegeneinander abgesetzten Bereichen der Welle mit dem Betrag nach gleichgroßen, jedoch zueinander entgegengesetzten Steigungen beaufschlagbar sein und dadurch trotz ihrer bezüglich der Welle gegenübergelegenen Anordnung gleichsinnig drehen.

Eine einstückige Ausbildung der Welle oder der weiteren rotierbaren Baueinheit verringert den Herstellungsaufwand. Alternativ kann insbesondere auch für große Anforderungen jeder einzelne Schneckenbereich einzeln auswechselbar sein und somit auch den Austausch nur der am stärksten verschlissenen Teile ermöglichen.

In der Ausbildung nach Anspruch 12 ist eine Bewegungsvorrichtung für verschiedene Karosserieteile vorgesehen, nicht nur für verriegelbare, sondern auch für von einem Antrieb bewegliche Karosserieteile, wie etwa ein in seiner geschlossenen Stellung an einem Windschutzscheibenrahmen halterbares Dach, eine Karosseriehaube oder -deckel oder ein absenkbares Fenster. Bei all diesen Teilen lassen sich die o. g. Vorteile erzielen. Der Notbetätigungsschlüssel kann insbesondere ein handelsübliches Werkzeug sein und jeweils aus einer bequemen Stellung in das Zahnrad eingeführt werden, daß aufgrund der Steigung mit vielen Umdrehungen, jedoch wenig Kraftaufwand zu bewegen ist.

Weitere Vorteile und Merkmale der Erfindung ergeben sich aus einem in der Zeichnung schematisch dargestellten und nachfolgend beschriebenen Ausführungsbeispiel des Gegenstandes der Erfindung.

In der Zeichnung zeigt:
- Fig. 1: eine perspektivische Ansicht auf ein beispiel- haftes erfindungsgemäßes Fahrzeug bei geschlos- senem Dach,
- Fig. 2: eine Ansicht von unten in das erfindungsgemäße Fahrzeug auf das vordere Dachende (Dachspitze) mit angedeutetem Dachbezug und mit einem nur schematisch und transparent angedeuteten Wind- schutzscheibenrahmen mit einem in etwa zen- tralen, hier verdeckt liegenden und gestrichelt angedeuteten Antriebsorgan sowie seitlich außen liegenden Eingriffsgliedern zur Verriegelung (hier nicht dargestellt) am Windschutzscheiben- rahmen, die über Zug-Schub-Stangen mit dem An- triebsorgan in Wirkverbindung stehen,
- Fig. 3: eine Ansicht von unten des Antriebsorgans und des Getriebes,
- Fig. 4: eine Schnittansicht etwa in der Ebene III-III in Fig. 3,
- Fig. 5: eine Detailansicht der sich drehenden Motorwelle und des Getriebes,
- Fig. 6: eine Detailansicht der Einwirkung der Motorwelle auf ein Zahnrad zur Notbetätigung,
- Fig. 7: eine ähnliche Ansicht wie Fig. 5 während der Notbetätigung über das gesonderte Zahnrad,

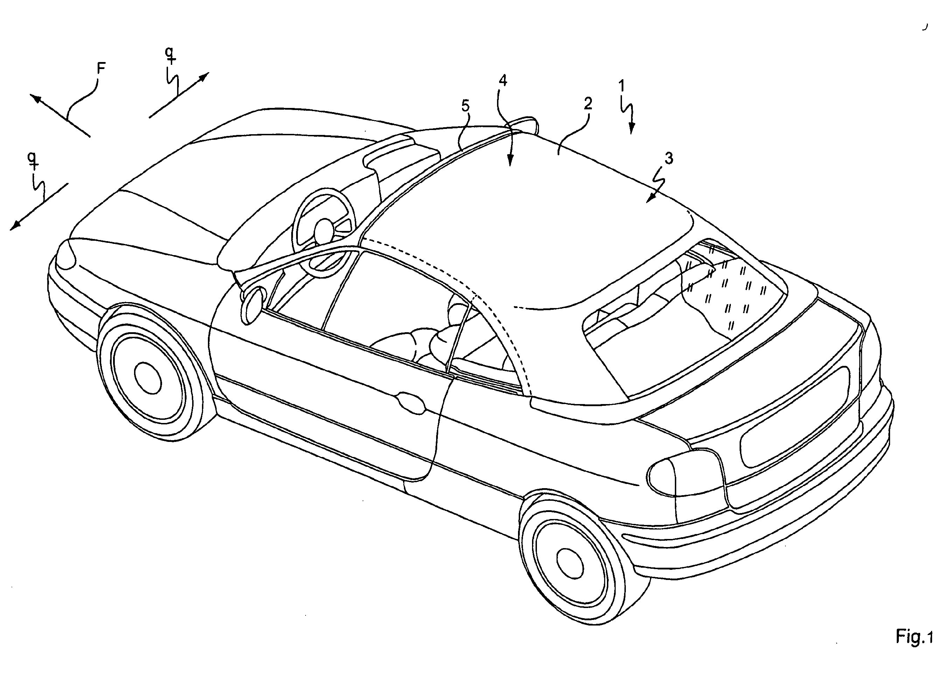

Das erfindungsgemäße Cabriolet-Fahrzeug 1 ist in der Darstellung nach Fig. 1 als sog. Soft-Top-Fahrzeug ausgebildet, umfaßt also einen flexiblen Dachbezug 2. Auch eine Ausbildung mit einem oder mehreren festen Dachteil(en) ist gleichwertig möglich.

Ebenso kann das Fahrzeug 1 sowohl ein Zweisitzer sein als auch einen größeren Innenraum mit zwei oder mehr Sitzreihen hintereinander aufweisen.

Es umfaßt in jedem Fall ein zumindest teilweise bewegliches Dach 3, das teilweise oder vollständig zu seiner Öffnung im rückwärtigen Fahrzeugbereich ablegbar ist. Das in Fahrtrichtung F vordere Ende 4 des Daches 3, das häufig auch als Dachspitze bezeichnet wird, ist mit dem Windschutzscheibenrahmen 5 des Fahrzeugs 1 mittelbar oder unmittelbar zur Sicherung der geschlossenen Dachstellung über eine Bewegungsvorrichtung V verriegelbar. Diese Bewegungsvorrichtung V ist zum Öffnen oder Schließen von hier beispielhaft zwei in Fahrzeugquerrichtung q seitlich mehr oder weniger weit außen liegenden Eingriffsorganen 6, die hier hakenartig ausgebildet und um horizontale Achsen schwenkbar sind, vorgesehen.

Die Eingriffsorgane können jedoch in unterschiedlichsten Weisen ausgebildet sein und zum Ver- oder Entriegeln auch translatorische oder überlagerte Rotations- und Translationsbewegungen ausführen oder um vertikale Achsen schwenken. Auch ist ihre Anzahl variabel. So kann beispielsweise ein zentrales Eingriffsorgan alternativ oder zusätzlich vorgesehen sein.

Die Eingrifforgane 6 können über von der Bewegungsvorrichtung V beaufschlagbare Kraftvermittler 7 beweglich sein. Diese sind hier als Zug-Schub-Stangen ausgebildet. Als Antriebsorgan der Bewegungsvorrichtung V kann ein Elektro-oder Hydraulikantrieb 8 dienen, der hier platzsparend in Fahrzeugquerrichtung liegend angeordnet ist. Der Antriebsmotor 8 kann sehr flach sein, wodurch die erforderliche Bauhöhe für die Bewegungsvorrichtung V minimiert ist. Hier ist ein Elektromotor 8 vorgesehen, dessen Antriebswelle 9 um eine horizontal und mehr oder weniger quer zum Fahrzeug 1 in der Dachspitze 4 gelegene Achse 10 drehbar ist.

Der Antrieb 8 wirkt mittelbar oder unmittelbar auf ein Getriebe 11 zur Bewegung der Zug- und Schubstangen 7 ein. Zusätzlich kann das Getriebe 11 auch von einer manuellen Notbetätigung 12 beaufschlagt werden.

Die Antriebswelle 9 oder je nach Geometrie eine von dieser beaufschlagbare rotierbare Baueinheit, zum Beispiel eine Verlängerung der Antriebswelle oder ein über eine Abwinklung umgelenkter Abschnitt (hier nicht gezeichnet), wirkt auf ein oder mehrere Antriebszahnräder 13, 14 ein. Im Ausführungsbeispiel sind zwei Antriebszahnräder 13, 14 vorgesehen, die auf gegenüberliegenden Seiten der Antriebswelle 9 gelegen sind und jeweils um bei geschlossenem Dach 3 vertikal stehende Achsen 15, 16 drehbar sind. Je nach Ausbildung kann auch ein einziges Antriebszahnrad hinreichend sein.

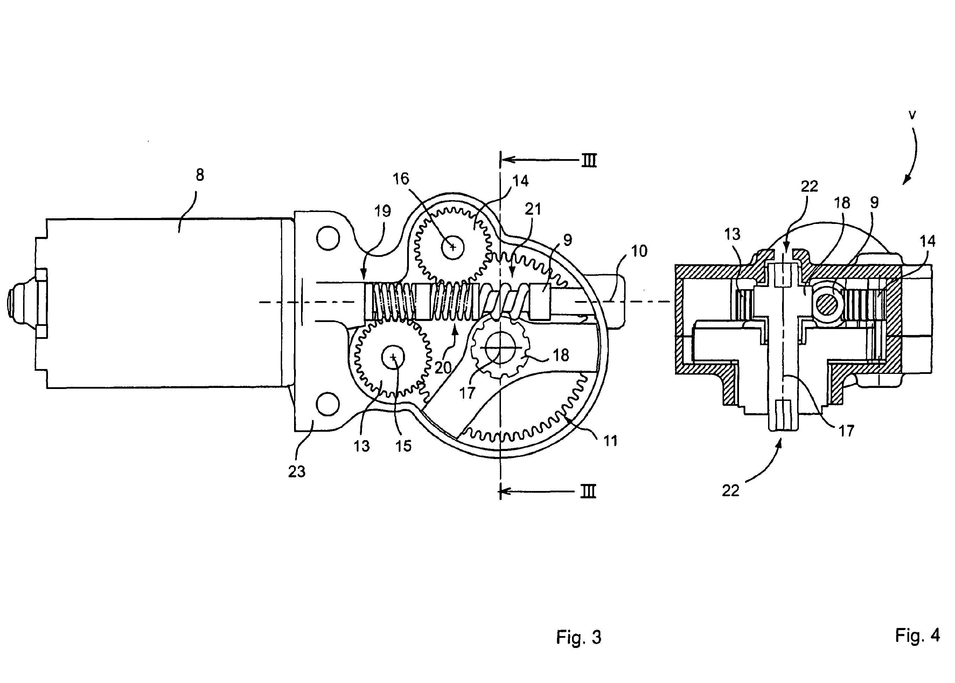

Des weiteren steht ein um eine parallel zu den Achsen 15, 16 stehende Achse 17 drehbares Zahnrad 18 der Notbetätigung 12 in dauerndem Eingriff mit der Antriebswelle 9 (Fig. 3).

Die Antriebswelle 9 oder weitere rotierbare Baueinheit bildet für den Eingriff mit den genannten Zahnrädern 13, 14, 18 unterschiedliche Schnecken- oder Spindelbereiche aus. Sie kann dennoch einstückig ausgebildet sein. Alternativ ist auch eine Ausbildung möglich, bei der Schneckenbereiche 19, 20, 21 auswechselbar auf der Welle 9 oder weiteren rotierbaren Baueinheit gehalten und beispielsweise über Stifte gesichert sind. Eine einzelne Austauschbarkeit ist dann möglich.

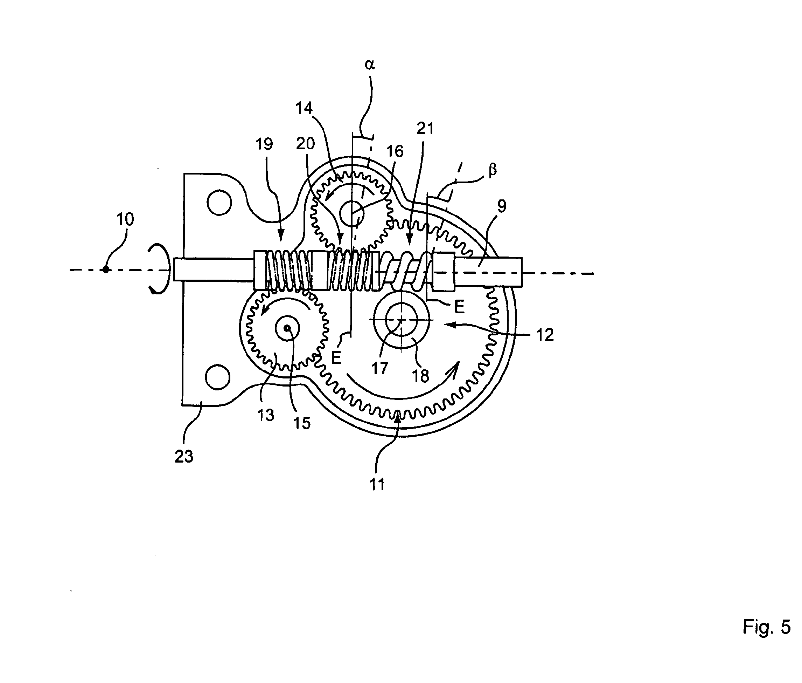

Die beiden Antriebszahnräder 13, 14 sind jeweils gleichartig, also mit gleichem Durchmesser, Zähneanzahl und Flankengeometrie, ausgebildet. Entsprechend sind die Schnekkenbereiche 19, 20 zu ihrer Beaufschlagung mit dem Betrag nach gleichartigen Steigungen versehen, wobei jedoch die Steigungen zueinander entgegengesetzte Vorzeichen aufweisen. Wie in Fig. 5 sichtbar ist, drehen dadurch die auf unterschiedlichen Seiten der Welle 9 gelegenen Antriebszahnräder 13, 14 bei aktivem Antrieb 8 gleichsinnig.

Die Bereiche 19, 20 weisen gegenüber der Ebene E, zu der die Drehachse 10 lotrecht steht, einen kleinen Anstellwinkel α der Schneckengänge auf. Die Welle 9 ist in diesen Bereichen 19, 20 selbsthemmend, wäre also nicht durch Drehung der Antriebszahnräder 13, 14 in Rotation zu versetzen. Dadurch läßt sich ein sehr großes Untersetzungsverhältnis von der Antriebswelle 9 zu Antriebszahnrädern 13, 14 erreichen, so daß diese relativ langsam drehen. Dadurch ist nur ein geringes Drehmoment erforderlich, der Antrieb 8 kann klein und damit raumsparend ausgebildet werden.

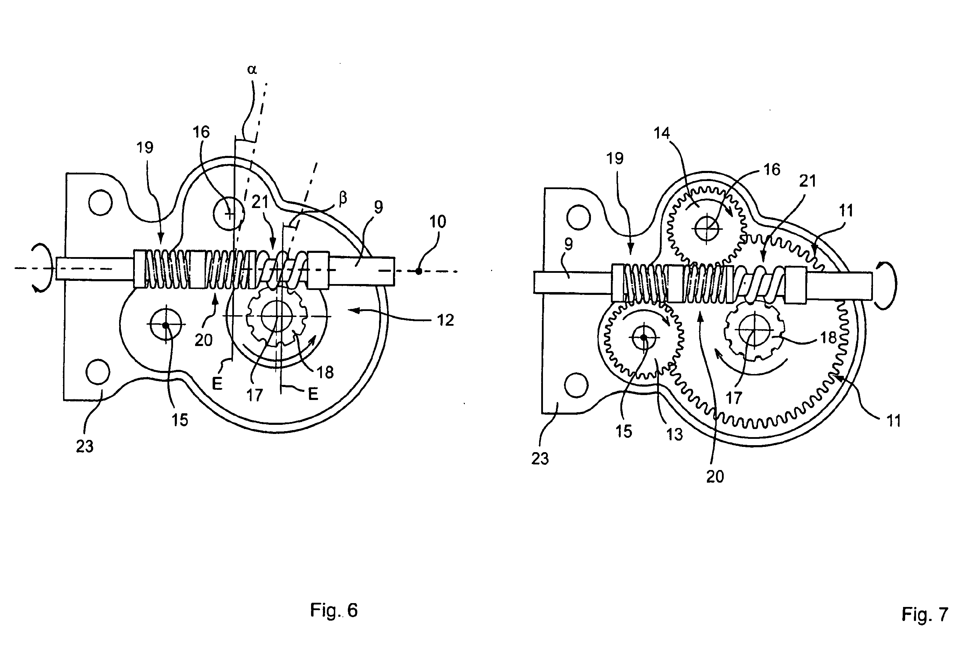

Die Wellensteigung β gegenüber der Ebene E im Bereich 21 der Welle 9 ist hingegen erheblich größer, so daß in diesem Bereich keine Selbsthemmung auftritt. Das in diesem Bereich ständig in Eingriff mit der Welle 9 stehende Ritzel 18 der Notbetätigung 12 dreht bei aktivem Antrieb lastfrei mit (Fig. 6). Der zusätzliche Antriebsaufwand zur Bewegung dieses Zahnrads 18 ist daher zu vernachlässigen. Bei Antriebsausfall kann dieses zumindest nahezu horizontal und parallel zur Erstreckungsebene der Dachspitze 4 liegende Zahnrad 18 durch Eingriff eines Handwerkzeugs, zum Beispiel eines Inbusschlüssels, in eine zentrale Öffnung 22 um seine Achse 17 manuell gedreht werden (Fig. 7). Da auch diese Achse parallel zu den Achsen 15, 16 bei geschlossenem Dach zumindest nahezu vertikal steht, kann eine solche Drehung des Handwerkzeugs komfortabel und ohne Gefahr, daß die Hand des Benutzers anschlägt, durchgeführt werden. Dieser ist dann in der Lage, über Eingriff in den Schneckenbereich 21 die Antriebswelle 9 oder weitere rotierbare Baueinheit trotz Ausfall des Antriebs 8 zu drehen, wobei die Antriebszahnräder 13, 14 dabei in Eingriff mit den Wellenbereichen 19, 20 bleiben und somit mitgedreht werden, worüber dann mittelbar die Eingriffsorgane 6 geöffnet oder insbesondere geschlossen werden können. Dabei ist auch hier wiederum nur ein geringes Drehmoment erforderlich.

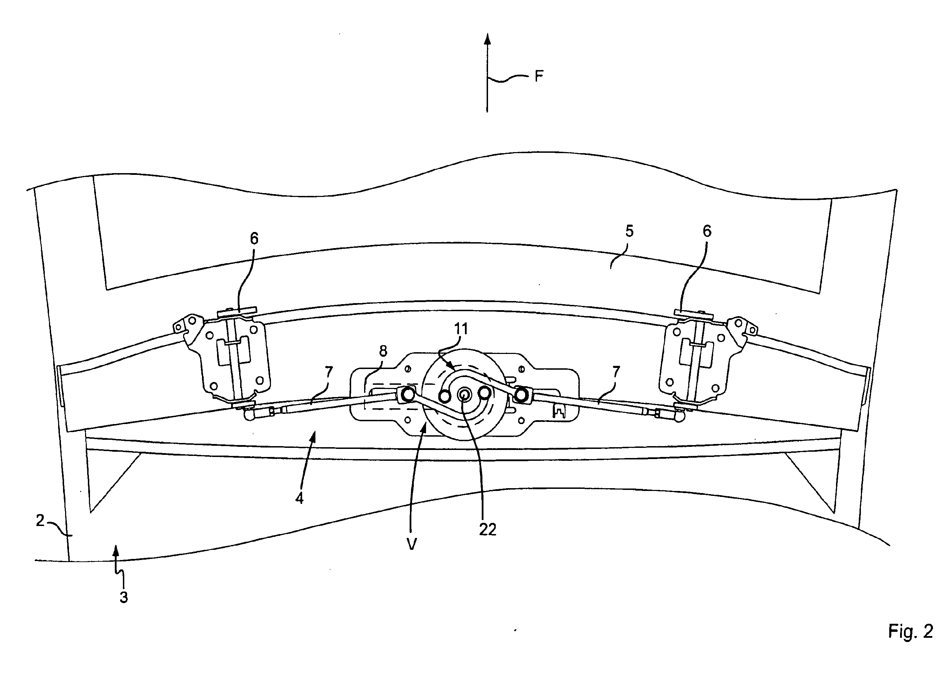

Die Eingriffsöffnung 22 steht gemäß der Darstellung nach Fig. 2 zentral. Dies ist jedoch nicht zwingend, sondern die Eingriffsöffnung 22 kann angepaßt an die Einbaugeometrie an einer günstigen Stelle im Fahrzeug liegen. Der Bereich 21 der Welle 9 kann hierzu zum Beispiel auch weiter von den Antriebszahnrädern 13, 14 entfernt liegen. Auch können zwei diametral gegenüber liegende Eingriffsöffnungen 22 vorgesehen sein, so daß die Einbaulage der Bewegungsvorrichtung V variabel ist.

In jedem Fall können jederzeit alle Zahnräder 13, 14, 18 in Eingriff mit der Welle 9 oder einer von dieser rotierbaren Baueinheit stehen. Es muß zu keinem Zeitpunkt ein Ein- oder Ausrücken eines Zahnrades vorgenommen werden.

Eine Grundplatte 23 der Bewegungsvorrichtung V kann so ausgebildet sein, daß wahlweise die eine oder andere Antriebsart oder unterschiedliche Zahnradanordnungen montiert werden können, so daß das Modul sowohl bei Fahrzeugen mit elektrischer als auch mit hydraulischer Verschlußbetätigung ohne weitere Änderungen eingesetzt werden kann.

Die Bewegungsvorrichtung V kann in jedem Fall vor ihrem Einbau vormontiert und getestet und als fertig eingestellte Einheit an die Dachspitze 4 anmontiert werden.

Es versteht sich, daß eine solche Bewegungsvorrichtung (V) auch für andere verriegelbare und/oder darüber bewegliche Karosserieteile eines Kraftfahrzeugs, insbesondere auch für eine Karosseriehaube oder -deckel oder ein absenkbares Fenster, verwendet werden kann. Die Antriebswelle 9 muß dabei nicht nur zum Öffnen oder Schließen einer Verriegelung dienen, sondern kann auch eine Bewegung dieses Karosserieteils, zum Beispiel eines Verdeckkastendeckels, selbst bewirken, was dann gegebenenfalls auch durch die manuelle Notbetätigung zu bewerkstelligen ist.

## Patentansprüche

1. Cabriolet-Fahrzeug (1) mit einem beweglichen, in seiner geschlossenen Stellung an einem Windschutzscheibenrahmen (5) über zumindest ein bewegliches Eingriffsorgan (6) halterbaren Dach (3) oder Dachbereich, wobei das oder die Eingriffsorgan(e) (6) über zumindest einen Antrieb (8) beweglich ist oder sind, der über eine Antriebswelle (9) auf ein Getriebe (11) einwirkt, das zumindest bei Ausfall des Antriebs (8) auch von einer manuellen Notbetätigung (12) beaufschlagbar ist,
**dadurch gekennzeichnet,**
**daß** die Antriebswelle (9) oder eine von dieser rotierbare und auf das Getriebe (11) einwirkende Baueinheit eine Schnecke mit Bereichen unterschiedlicher Steigung (19,20;21) ausbildet, wobei ein auf zumindest ein Antriebszahnrad (13;14) einwirkender Bereich (19;20) einen gegenüber einer senkrecht zu der Drehachse (10) der Welle (9) oder der rotierbaren Baueinheit stehenden Ebene (E) kleinen Anstellwinkel (α) und ein von zumindest einem Zahnrad (18) einer manuellen Notbetätigung (12) beaufschlagbarer Bereich (21) einen gegenüber der Ebene (E) größeren Anstellwinkel (β) aufweist.

2. Cabriolet-Fahrzeug (1) nach Anspruch 1,
**dadurch gekennzeichnet,**
**daß** der auf das zumindest eine Antriebszahnrad (13;14) einwirkende Bereich (19;20) selbsthemmend und nicht von dem zumindest einen Antriebszahnrad (13;14) drehbar ist.

3. Cabriolet-Fahrzeug (1) nach einem der Ansprüche 1 oder 2,
**dadurch gekennzeichnet,**
**daß** in der vom Antrieb (8) beaufschlagten Bewegung das zumindest eine Zahnrad (18) der manuellen Notbetätigung (12) lastfrei mitdreht.

4. Cabriolet-Fahrzeug (1) nach einem der Ansprüche 1 bis 3,
**dadurch gekennzeichnet,**
**daß** ein Zahnrad (18) der Notbetätigung (12) zumindest einen Zentraleingriff (22) für den Eingriff eines Handwerkzeugs aufweist.

5. Cabriolet-Fahrzeug (1) nach Anspruch 4,
**dadurch gekennzeichnet,**
**daß** zwei einander gegenüberliegende Eingriffe (22) vorgesehen sind.

6. Cabriolet-Fahrzeug (1) nach einem der Ansprüche 1 bis 5,
**dadurch gekennzeichnet,**
**daß** das Zahnrad (18) eine horizontale Einbaulage aufweist und das Handwerkzeug um eine vertikale Achse (17) drehbar ist.

7. Cabriolet-Fahrzeug (1) nach einem der Ansprüche 1 bis 6,
**dadurch gekennzeichnet,**
**daß** die Welle (9) oder die weitere rotierbare Baueinheit jeweils einstückig ausgebildet ist.

8. Cabriolet-Fahrzeug (1) nach einem der Ansprüche 1 bis 6,
**dadurch gekennzeichnet**
**daß** die Bereiche unterschiedlicher Steigung (19;20; 21) auf die Welle (9) oder die weitere rotierbare Baueinheit aufsetzbar sind.

9. Cabriolet-Fahrzeug (1) nach einem der Ansprüche 1 bis 8,
**dadurch gekennzeichnet,**
**daß** der Antrieb (8) quer im Fahrzeug (1) liegt und die Antriebswelle (9) um eine horizontale Achse (10) drehbar ist.

10. Cabriolet-Fahrzeug (1) nach einem der Ansprüche 1 bis 9,
**dadurch gekennzeichnet,**
**daß** zwei auf einander gegenüberliegenden Seiten der Welle (9) gelegene Antriebszahnräder (13;14) vorgesehen sind.

11. Cabriolet-Fahrzeug (1) nach Anspruch 10,
**dadurch gekennzeichnet,**
**daß** die beiden Antriebszahnräder (13;14) von Bereichen (19;20) der Welle (9) mit dem Betrag nach gleichgroßen, jedoch zueinander entgegengesetzten Steigungen (α) beaufschlagbar sind.

12. Bewegungsvorrichtung (V) für ein verriegelbares und/oder beweglichen Karosserieteil eines Kraftfahrzeugs (1), insbesondere für ein in seiner geschlossenen Stellung an einem Windschutzscheibenrahmen (5) halterbares Dach (3), eine Karosseriehaube oder -dekkel oder ein absenkbares Fenster, wobei das Karosserieteil und/oder zumindest ein zur Verriegelung dienendes Eingriffsorgan(e) (6) über zumindest einen Antrieb (8) beweglich ist oder sind, der über eine Antriebswelle (9) auf ein Getriebe (11) einwirkt, das zumindest bei Ausfall des Antriebs (8) auch von einer manuellen Notbetätigung beaufschlagbar ist,
**dadurch gekennzeichnet,**
**daß** die Antriebswelle (9) oder eine von dieser rotierbare und auf das Getriebe (11) einwirkende Baueinheit eine Schnecke mit Bereichen unterschiedlicher Steigung (19,20;21) ausbildet, wobei ein auf zumindest ein Antriebszahnrad (13;14) einwirkender Bereich (19;20) einen gegenüber einer senkrecht zu der Drehachse (10) der Welle (9) oder der rotierbaren Baueinheit stehenden Ebene (E) kleinen Anstellwinkel (α) und ein von zumindest einem Zahnrad (18) einer manuellen Notbetätigung (12) beaufschlagbarer Bereich (21) einen gegenüber der Ebene (E) größeren Anstellwinkel (β) aufweist.

## Claims

1. A convertible vehicle (1) comprising a movable roof (3) or roof area, which can be fixed in its closed position to a windscreen frame (5) via at least one movable engagement member (6), wherein the engagement member(s) (6) is or are movable via at least one drive (8) acting on a transmission (11) via a drive shaft (9), which transmission (11) can also be actuated by a manual emergency actuation mechanism (12) at least upon failure of the drive (8),
**characterised in that**
the drive shaft (9) or an assembly which can be rotated by the drive shaft (9) and acts on the transmission (11) forms an endless screw with different-pitch areas (19, 20; 21), wherein an area (19; 20) acting on at least one drive gear (13; 14) has a small angle of attack (α) with respect to a plane (E) which is perpendicular to the axis of rotation (10) of the shaft (9) or to the rotary assembly and an area (21) upon which at least one gear (18) of a manual emergency actuation mechanism (12) can act has a greater angle of attack (β) with respect to said plane (E).

2. The convertible vehicle (1) according to claim 1, **characterised in that** the area (19; 20) acting on the at least one drive gear (13; 14) is self-locking and cannot be rotated by the at least one drive gear (13; 14).

3. The convertible vehicle (1) according to any one of claims 1 or 2, **characterised in that**, in the movement actuated by the drive (8), the at least one gear (18) of the manual emergency actuation mechanism (12) simultaneously rotates load-free.

4. The convertible vehicle (1) according to any one of claims 1 to 3, **characterised in that** a gear (18) of the emergency actuation mechanism (12) comprises at least one central engagement point (22) for engaging a hand tool.

5. The convertible vehicle (1) according to claim 4, **characterised in that** two engagement points (22) located opposite each other are provided.

6. The convertible vehicle (1) according to any one of claims 1 to 5, **characterised in that** the gear (18) is installed horizontally and the hand tool can be rotated about a vertical axis (17).

7. The convertible vehicle (1) according to any one of claims 1 to 6, **characterised in that** the shaft (9) or the further rotary assembly, respectively, is one piece.

8. The convertible vehicle (1) according to any one of claims 1 to 6, **characterised in that** the different-pitch areas (19; 20; 21) can be fitted on the shaft (9) or on the further rotary assembly.

9. The convertible vehicle (1) according to any one of claims 1 to 8, **characterised in that** the drive (8) is located transversely in the vehicle (1) and the drive shaft (9) can be rotated about a horizontal axis (10).

10. The convertible vehicle (1) according to any one of claims 1 to 9, **characterised in that** two drive gears (13; 14) are provided, which are arranged on two opposite sides of the shaft (9).

11. The convertible vehicle (1) according to claim 10, **characterised in that** the two drive gears (13;14) can be actuated by areas (19;20) of the shaft (9) with pitches (α) that are equal in amount but opposed to each other.

12. A moving device (V) for a lockable and/or movable body component of a motor vehicle (1), in particular for a roof (3) that can be fixed to a windscreen frame (5) in its closed position, for a body hood or body lid, or for a lowerable window, said body component and/or at least one engagement member (6) for locking is or are movable via at least one drive (8) acting on a transmission (11) via a drive shaft (9), which transmission (11) can also be actuated by a manual emergency actuation mechanism (12) at least upon failure of the drive (8), **characterised in that**
the drive shaft (9) or an assembly which can be rotated by the drive shaft (9) and acts on the transmission (11) forms an endless screw with different-pitch areas (19, 20; 21), wherein an area (19; 20) acting on at least one drive gear (13; 14) has a small angle of attack (α) with respect to a plane (E) which is perpendicular to the axis of rotation (10) of the shaft (9) or to the rotary assembly and an area (21) upon which at least one gear (18) of a manual emergency actuation mechanism (12) can act has a greater angle of attack (β) with respect to said plane (E).

## Revendications

1. Véhicule cabriolet (1) comprenant un toit (3) déplaçable ou une région de toit déplaçable, qui peut être maintenu(e), dans sa position fermée, sur un cadre de pare-brise (5) par au moins un organe de prise (6) déplaçable, le ou les organes de prise (6) étant déplaçable(s) par au moins un entraînement (8) agissant sur un engrenage (11) au moyen d'un arbre d'entraînement (9), ledit engrenage (11) pouvant également être actionné par un mécanisme d'actionnement d'urgence manuel (12) au moins lors d'une panne de l'entraînement (8),
**caractérisé en ce que**
l'arbre d'entraînement (9) ou un ensemble qui peut être mis en rotation par l'arbre d'entraînement (9) et agit sur l'engrenage (11) constitue une vis sans fin avec des régions à pas différents (19, 20; 21), dont une région (19; 20) agissant sur au moins une roue dentée d'entraînement (13; 14) présente un petit angle d'attaque (α) par rapport à un plan (E) qui est perpendiculaire à l'axe de rotation (10) de l'arbre (9) ou à l'ensemble rotatif, et une région (21) sur lequel peut agir au moins une roue dentée (18) d'un mécanisme d'actionnement d'urgence manuel (12) présente un angle d'attaque (β) supérieur par rapport audit plan (E).

2. Véhicule cabriolet (1) selon la revendication 1, **caractérisé en ce que** la région (19; 20) agissant sur l'au moins une roue dentée d'entraînement (13; 14) est autobloquante et ne peut pas mise en rotation par l'au moins une roue dentée d'entraînement (13; 14).

3. Véhicule cabriolet (1) selon l'une quelconque des revendications 1 ou 2, **caractérisé en ce que**, dans le mouvement actionné par l'entraînement (8), l'au moins une roue dentée (18) du mécanisme d'actionnement d'urgence manuel (12) tourne en même temps sans charge.

4. Véhicule cabriolet (1) selon l'une quelconque des revendications 1 à 3, **caractérisé en ce qu'**une roue dentée (18) du mécanisme d'actionnement d'urgence (12) comprend au moins un point d'engrènement central (22) pour l'engrènement d'un outil manuel.

5. Véhicule cabriolet (1) selon la revendication 4, **caractérisé en ce que** l'on prévoit deux points d'engrènement (22) opposés.

6. Véhicule cabriolet (1) selon l'une quelconque des revendications 1 à 5, **caractérisé en ce que** la roue dentée (18) est installée en position horizontale et l'outil manuel peut être tourné autour d'un axe vertical (17).

7. Véhicule cabriolet (1) selon l'une quelconque des revendications 1 à 6, **caractérisé en ce que** l'arbre (9) ou l'ensemble rotatif additionnel sont chacun formés d'une seule pièce.

8. Véhicule cabriolet (1) selon l'une quelconque des revendications 1 à 6, **caractérisé en ce que** les régions à pas différents (19; 20; 21) peuvent être mises sur l'arbre (9) ou sur l'ensemble rotatif additionnel.

9. Véhicule cabriolet (1) selon l'une quelconque des revendications 1 à 8, **caractérisé en ce que** l'entraînement (8) est disposé transversalement dans le véhicule (1) et l'arbre d'entraînement (9) est rotatif autour d'un axe horizontal (10).

10. Véhicule cabriolet (1) selon l'une quelconque des revendications 1 à 9, **caractérisé en ce que** l'on prévoit deux roues dentées d'entraînement (13; 14), qui sont disposées sur deux côtés opposés de l'arbre (9).

11. Véhicule cabriolet (1) selon la revendication 10, **caractérisé en ce que** les deux roues dentées d'entraînement (13;14) peuvent être actionnées par des régions (19;20) de l'arbre (9) avec des pas (α) de valeurs identiques qui sont opposés les uns aux autres.

12. Dispositif de déplacement (V) pour un élément de carrosserie verrouillable et/ou déplaçable d'un véhicule automobile (1), notamment pour un toit (3) qui peut être maintenu, dans sa position fermée, sur un cadre de pare-brise (5), pour un capot de carrosserie ou un couvercle de carrosserie, ou pour une fenêtre qui peut être abaissée, ledit élément de carrosserie et/ou au moins un organe de prise (6) réalisant un verrouillage étant déplaçable par au moins un entraînement (8) qui agit sur un engrenage (11) au moyen d'un arbre d'entraînement (9), ledit engrenage (11) pouvant également être actionné par un mécanisme d'actionnement d'urgence manuel (12) au moins lors d'une panne de l'entraînement (8),
**caractérisé en ce que**
l'arbre d'entraînement (9) ou un ensemble qui peut être mis en rotation par l'arbre d'entraînement (9) et agit sur l'engrenage (11) constitue une vis sans fin avec des régions à pas différents (19, 20; 21), dont une région (19; 20) agissant sur au moins une roue dentée d'entraînement (13; 14) présente un petit angle d'attaque (α) par rapport au plan (E) qui est perpendiculaire à l'axe de rotation (10) de l'arbre (9) ou à l'ensemble rotatif, et une région (21) sur lequel peut agir au moins une roue dentée (18) d'un mécanisme d'actionnement d'urgence manuel (12) présente un angle d'attaque (β) supérieur par rapport audit plan (E).
